# EUROPEAN PATENT APPLICATION

(11) **EP 1 482 476 A2**
(43) Date of publication of application: **01.12.2004**
(21) Application number: 04101747.6
(22) Date of filing: 26.04.2004
(51) Int. Cl.: G09G 5/00

(54) **Externally configurable monitor**

(30) Priority: 31.05.2003 KR 2003035161
(71) Applicant: Samsung Electronics Co., Ltd., Suwon-si Gyeonggi-do 442-742 (KR)
(72) Inventor: Lee, Kyung-shik, Suji-eup, Yongin city, Kyungki-do (KR); Jang, Mi-sook, Wonchun Jugong Apt.#107-1503, Suwon-city, Kyungki-do (KR)
(74) Representative: Read, Matthew Charles

(57) **Abstract**

A method to provide a convenient user interface to change a display setting of a picture area of a display apparatus, which is communicated with an external device, the method including: displaying a main window including a step start button to initiate a sequence of at least first and second display setting adjustment windows in which first and second display setting adjustments are made; displaying sequentially the display setting adjustment windows corresponding to a selection of the step start button; adjusting the display setting through the displayed display setting adjustment windows; issuing a command from the external device in correspondence to adjusting the displayed display setting adjustment windows; and setting the display setting in correspondence to the command. With this configuration, the present invention provides a convenient user interface to adjust a plurality of display settings of a picture area.

## Description

The present invention relates to a method of configuring a monitor connected to receive video signals from a computer, the method comprising running a configuration program which displays its user interface on the screen of the monitor, and to a computer system comprising a monitor connected to a computer to received video signals therefrom.

A display apparatus receives horizontal/vertical synchronous signals and RGB (red, green, blue) signals from the graphics controller of a computer and displays a picture.

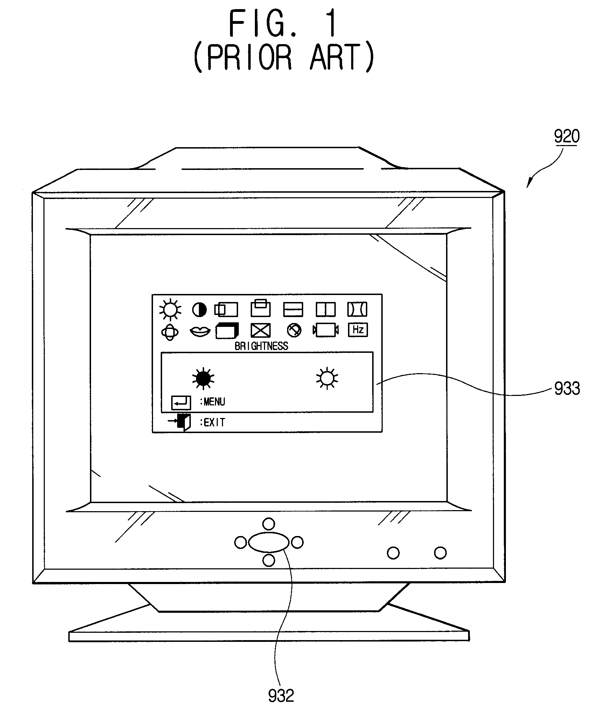

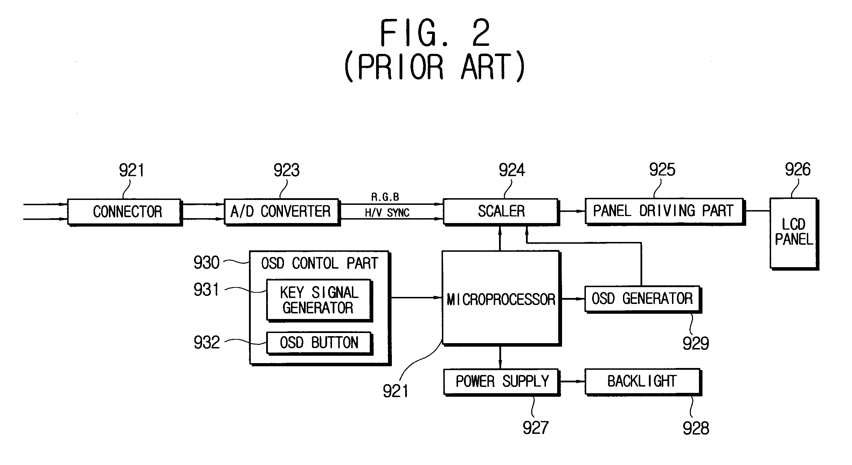

A conventional display apparatus 920, as shown in Figures 1 and 2, comprises a connector 921 such as a D-sub connector for receiving analog RGB signals and horizontal/vertical synchronous signals from the graphics controller of a computer, an A/D converter 923 for converting the analog RGB signals into digital signals, a scaler 924 for fitting the digitized horizontal/vertical synchronous signals and the digitized RGB signals from the A/D converter 923 to the size of an LCD (liquid crystal display) panel 926 and transmitting them to a panel driving part 925, the panel driving part 925 for driving the LCD panel 926, a backlight 928 for setting the brightness of the LCD panel 926, a microprocessor 921 for controlling the foregoing components and a power supply 927 for supplying electric power to the foregoing components including the backlight 928 under the control of the microprocessor 921.

Furthermore, the conventional display apparatus 920 comprises an OSD (on screen display) generator 929 for generating OSD signals and an OSD control part 930 for generating a key signal. The OSD control part 930 includes an OSD button 932, placed on the front of the display apparatus 920, and a key signal generator 931 for generating a key signal when the OSD button 932 is pressed. Therefore, when a user presses the OSD button 932, the key signal generator 931 transmits the key signal to the microprocessor 921, in response to pressing of the OSD button 932, and the microprocessor 921 controls the OSD generator 929 according to the key signal transmitted from the key generator 931, thereby activating an OSD menu 933 on the LCD panel 926. As described above, the conventional display apparatus 920 employs the OSD generator 929 and the OSD control part 930 to adjust display settings such as the size, the position, the contrast, the colour temperature, the resolution, etc. of a picture area.

However, the conventional method of adjusting the display settings using the OSD generator 929 and the OSD control part 930 of the display apparatus 920 has the following problems.

First, the display apparatus 920 needs the OSD generator 929, the OSD control part 930, etc. to be specially provided to adjust the display settings of the picture area.

Second, the display apparatus 920 must have a dedicated EEPROM (electrically erasable programmable read-only memory) for storing data and a program associated with items of the OSD menu 933, or must have a larger general memory.

Third, there is a limit to the storage capacity of the memory, included in displays apparatus 920, and therefore the mount of data or the program associated with the items of the OSD menu 933 is limited by the storage capacity of the memory. This may make the OSD menu 933 short, that is, all items for the display settings are not sufficiently displayed. Therefore, there is separately required an OSD manual giving instructions as to adjusting the display settings through the OSD menu 933. Further, it is inconvenient to refer to the OSD manual to adjust the display settings.

Fourth, because the front of the display apparatus 920 has a limited area, the OSD buttons 932 placed in the front of the display apparatus 920 is limited in number. That is, it is impossible to provide various OSD buttons 932. Therefore, a user has to press the same OSD button 932 repeatedly to adjust the display settings, which is inconvenient.

Consequently, the conventional display apparatus 920 has an OSD generator 929, an OSD control part 930, etc. but does not provide a convenient user interface for the adjustment of the display settings.

A method, according to the present invention, is characterised in that the program is run on the computer.

The program is configured to receive user input signals from a source other than the monitor, e.g a mouse or a keyboard.

A computer system, according to the present invention, is characterised by the computer being programmed with a program for configuring the monitor.

According to the present invention, there is also provided a signal representing a program for programming a computer connected to a monitor to produce a system according to the present invention and a data carrier having such a signal recorded therein or thereon.

Additional preferred and optional features of the present invention are set forth in claims 6 to 35 appended hereto.

Embodiments of the present invention will now be described, by way of example, with reference to Figures 3 to 23 of the accompany drawings of which:
Figure 1 is a front view of a conventional monitor;
Figure 2 is a control block diagram of the monitor shown in Figure 1;
Figure 3 is a control block diagram of a computer system using a display apparatus according to an embodiment of the present invention;
Figures 4 to 9 illustrate display configuration windows for adjusting a plurality of display settings in an embodiment of the present invention;
Figures 10 to 17 illustrate a display configuration window for selectively adjusting display settings in an embodiment of the present invention;
Figure 18 illustrates a magic brightness setting panel of a window of an embodiment of the present invention;
Figure 19 illustrates a preferences setting panel of a window of an embodiment of the present invention;
Figure 20 illustrates an upgrade panel of a window of an embodiment of the present invention;
Figure 21 illustrates a technical support panel of a window of an embodiment of the present invention;
Figure 22 illustrates a display apparatus information panel of a window of an embodiment of the present invention; and
Figure 23 illustrates a version information panel of a window of an embodiment of the present invention.

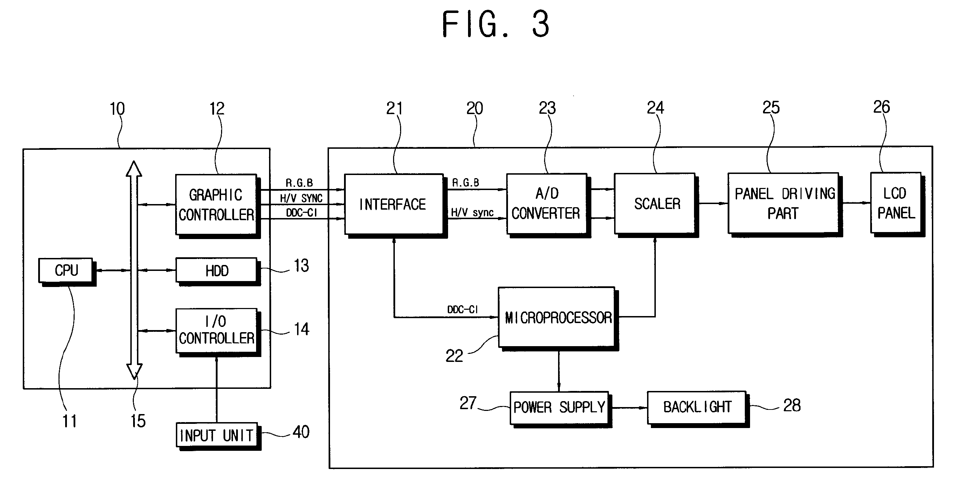

Referring to Figure 3, a computer system according to the present invention comprises a monitor 20 having a picture area on a screen 26, a computer 10, which transmits video signals to the monitor 20, and an input unit 40 such as a keyboard, a mouse, etc.

The monitor 20 comprises an interface 21 for receiving, for example, RGB signals and horizontal/vertical synchronous signals from a graphics controller 12 of the computer 10, an A/D converter 23 for converting the horizontal/vertical synchronous signals and the RGB signals into digital signals, a scaler 24 for fitting the digitized horizontal/vertical synchronous signals and the digitized RGB signals from the A/D converter 23 to the size of an LCD panel 26, and transmitting them to a panel driving part 25, the panel driving part 25 for driving the LCD panel 26, a backlight 28 for illuminating the LCD panel 26, a microprocessor 22 for controlling the foregoing components and a power supply 27 for supplying electric power to the foregoing components including the backlight 28 under the control of the microprocessor 22.

The computer 10 comprises a central processing unit (CPU) 11, the graphics controller 12 which outputs video signals to the monitor 20, an input/output (I/O) controller 14 connected to the input unit 40 and which processes input signals from the input unit 40, a hard disk drive 13, storing an operating system (OS) and a plurality of other programs, and a system bus 15 electrically connecting the foregoing components.

The hard disk drive 13 stores a display setting program to provide a user interface allowing a user to adjust the display settings of the monitor 20. The display setting program generates its user interface elements by sending signals to the graphics controller 12 which generates an appropriate video signal and transmits the video signal to the monitor 20. The microprocessor 22 of the monitor 20 controls the A/D converter 23, the scaler 24, the panel driving part 25 according to the video signal from the graphics controller 12 and displays a display settings window on the LCD panel 26. When a user selects elements of the interface window using the input unit 40 the display setting program issues commands to the graphics controller 12 which passes them on to the monitor 20. The command issued from the graphics controller 12 to the interface 21 is transmitted to the microprocessor 22 and the microprocessor 22 adjusts the display settings of the monitor 20 on the basis of the command.

The monitor 20 is connected to the computer 10 and two-way communication is possible between the monitor 20 and the computer 10. In this embodiment, the interface 21 of the monitor 20 employs a DDC-CI (display data channel common interface) by way of example. However, it should be appreciated that the present invention is applicable to any two-way communication interface such as a USB (universal serial bus) interface. The DDC-CI is a standard interface, established by VESA (Video Electronics Standards Association), by which a computer can recognize a device when the device is pluged into the computer, i.e., P'n'P (plug and play). The DDC-CI standard defines the signal lines and signal sequences for communication between the monitor and the computer.

In the present embodiment, when the monitor 20 is pluged into the computer 10, the computer 10 reads P'n'P data, e.g. the EDID (extended display identification), from the monitor 20 through the DDC-CI. The commands from the display setting program are also transmitted to the monitor 20 through the DDC-CI.

The display settings of the the monitor 20 include picture position, picture colour temperature, picture resolution, picture clock/phase, picture contrast and picture brightness. The position setting allows the position of the picture area of the monitor 20 to be adjusted. The colour temperature setting, the resolution setting, the clock/phase setting, the contrast setting and the brightness setting allow the colour temperature, the resolution, the clock/phase, the contrast, the brightness of a picture displayed in the picture area to be adjusted.

The microprocessor 22 controls the scaler 24 on the basis of the position setting value, the colour temperature setting value, a resolution setting value, a clock/phase setting value and a contrast setting value, stored in a memory such as an EEPROM, and controls the backlight 28 on the basis of a brightness setting value stored in the memory, thereby adjusting the picture displayed in the picture area. The display settings values stored in the memory in the monitor 20 are changed in response to the commands issued by the display setting program.

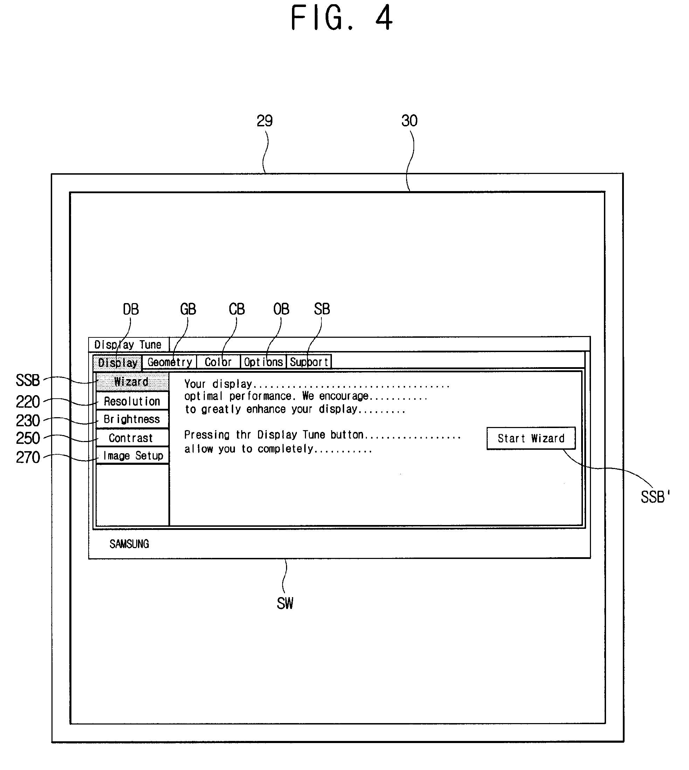

A method of adjusting the display settings of the monitor will now be described with reference to Figures 4 to 23.

First, the monitor 20 is connected to the computer 10 by the DDC-CI. When a user executes the display setting program on the computer 10, the display setting program transmits a main window defining signal to the graphics controller 12. The graphics controller 12 responds to the window defining signal by including a display settings window in the video signal transmitted to the monitor 20. Then, the microprocessor 22 of the monitor 20 controls the scaler 24, the backlight 28, and the panel driving part 25 to display the main window "SW".

Referring to Figure 4, the main window "SW" displayed on the monitor 20, comprises a step start button "SSB" and tabs "DB, GB, CB, OB, SB". The step start button "SSB" starts a process in which a plurality of display settings are adjustable sequentially and the first three tabs "DB, GB, CB" enable the user to adjust the display settings independently.

The process of sequentially adjusting the plurality of display settings in response to a user selecting the step start button "SSB" will be described hereinbelow. Here, the main window "SW" shown in Figure 4 further comprises a further step start button "SSB"' to start the sequential adjustment of the display settings.

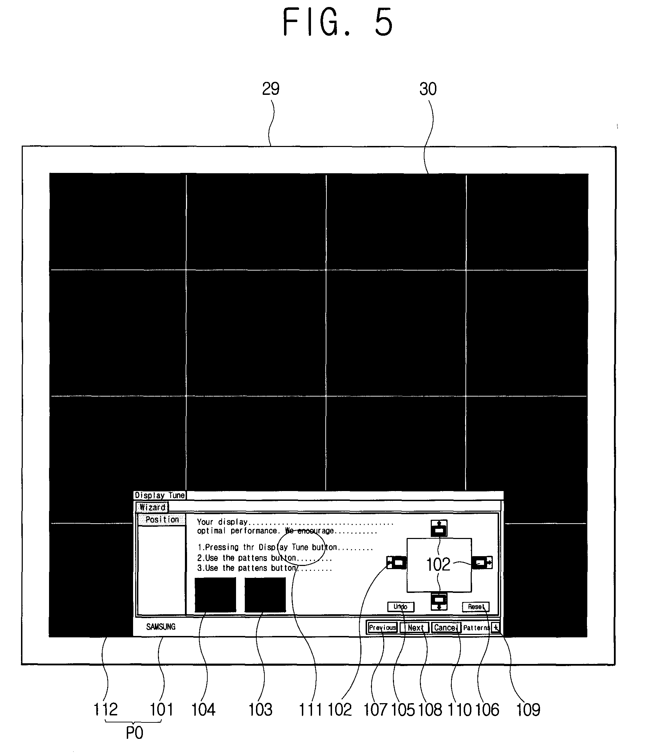

When a user selects the step start button "SSB"', a position setting display "PO" is shown as shown in Figure 5. The position setting display "PO" includes a position adjusting window 101 having four position adjusting buttons 102 for moving the picture area to move up, down, left and right on the monitor's screen, labels 111 and a reference pattern 112 occupying the picture area except the area occupied with the position adjusting window 101. When the user selects one of the position adjusting buttons 102, the display setting program issues a command, corresponding to the selected position adjusting button 102, to the microprocessor 22 through the DDC-CI interface and the microprocessor 22 moves the picture area up, down, left or right on the monitor's screen in accordance with the command received from the display setting program. At this time, the position pattern window 112 (i.e. the picture area except the area occupied with the position adjusting window 101) moves up, down, left or right according to the position adjustment, thereby allowing a user to see the position of the picture area easily.

The position adjusting window 101 includes an undo button 105. When the user selects the undo button 105, the display setting program issues a command, corresponding to the selected undo button 105, and the microprocessor 22 receives the command from the display setting program through the DDC-CI and undoes the previously effected change.

The position adjusting window 101 includes a reset button 106. When the reset button 106 is selected, the position setting value is returned to a default value. That is, when a user selects the reset button 106, the display setting program issues a command, corresponding to the selected reset button 106, and the microprocessor 22 receives the command from the display setting program through the DDC-CI and controls the scaler 24 to adjust the position of the picture area relative to the monitor's screen on the basis of default values stored in the memory.

The position adjusting window 101 includes an optimizing image widget 103 to show an optimized position according to the position adjustment. The optimizing image widget 103 displays a monitor block corresponding to the monitor and a picture block corresponding to the position pattern window 112, thereby allowing a user to get the optimized position of the picture area relative to the monitor.

The position adjusting window 101 includes an animation image widget 104 to show the position change of the position pattern window 112 as an animation corresponding to selecting the position adjusting button 102. In this embodiment, the animation image widget 104 is adjacent to the optimizing image widget 103, so that a user can see both the position change and the optimizing position of the position pattern window 112.

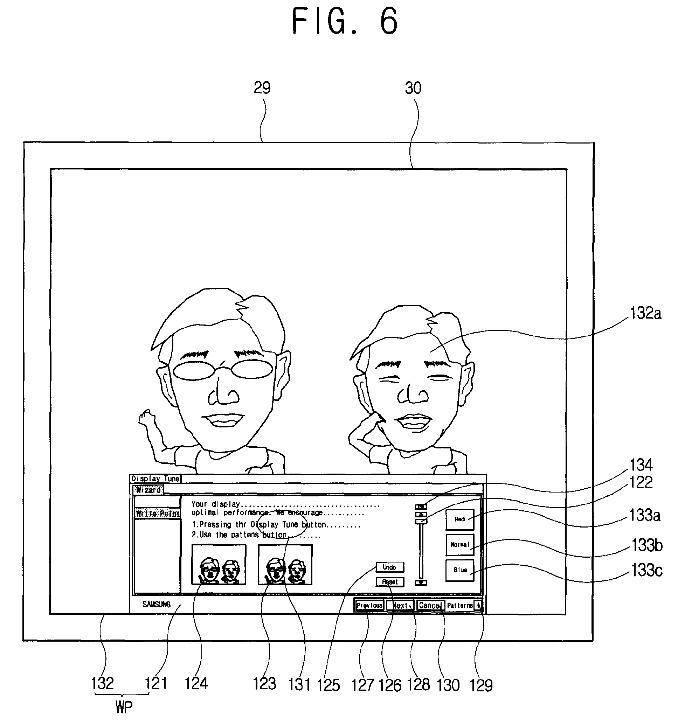

The position adjusting window 101 includes a previous button 107 to return to the previous setting window, i.e. the main window "SW", and a next button 108 to move to the next setting window, i.e. the colour temperature setting window "WP" shown in Figure 6. When the next button 108 is selected, the changed position setting value, based on the position adjustment due to the user's selection, is stored in memory.

When a user selects the next button 108 in the position adjusting window 101, the colour temperature setting window "WP" is shown as shown in Figure 6. The colour temperature setting window "WP" includes a colour temperature adjusting window 121 having a colour temperature slider widget 122 for adjusting the colour temperature setting, labels 131 and a colour temperature pattern window 132 having a predetermined picture 132a, the colour temperature of which is changed as the colour temperature slider widget 122 operated. When the user moves the slider of the colour temperature slider widget 122, the display setting program issues a command corresponding to the new position of the slider of the colour temperature slider widget 122 to the microprocessor 22 through the DDC-CI and the microprocessor 22 controls the scaler 24 to adjust the colour temperature of the picture 132a, displayed in the picture area in correspondence to the received command. The colour temperature pattern window 132 displays the picture 132a based on the colour temperature adjustment corresponding to the new position of the colour temperature slider widget 122.

The colour temperature adjusting window 121 includes a colour temperature level block 134 to represent the colour temperature setting corresponding to the position of the slider of the colour temperature slider widget 122 as a numerical value. In an embodiment of the invention, the colour temperature level block 134 is adjacent to the colour temperature drag bar 132.

The colour temperature adjusting window 121 includes a red button 133a to increase the red colour temperature setting, a blue button 133c to increase the blue colour temperature setting and a normal button 133b to adjust the colour temperature setting to mediate between the red colour temperature setting and the blue colour temperature setting. When a user selects the red button 133a, the colour temperature of the picture displayed on the picture area is decreased towards red. When a user selects the blue button 133c, the colour temperature of the picture displayed on the picture area is increased towards blue. When a user selects the normal button 133b, the colour temperature of the picture displayed on the picture area is set between red and blue.

The colour temperature adjusting window 121, in an embodiment of the invention, includes an undo button 125, a reset button 126, an optimizing image widget 123, an animation image widget 124, a previous button 127 and a next button 128 which correspond to the undo button 105, the reset button 106, the optimizing image widget 103, the animation image widget 104, the previous button 107 and the next button 108 included in the position adjusting window 101, respectively. Similarly, the undo button 125, the reset button 126, the optimizing image widget 123, the animation image widget 124, the previous button 127 and the next button 128 included in the colour temperature adjusting window 121 are identical with those of the position adjusting window 101 in the disposition, the display and the operation, so that repetitive descriptions will be avoided.

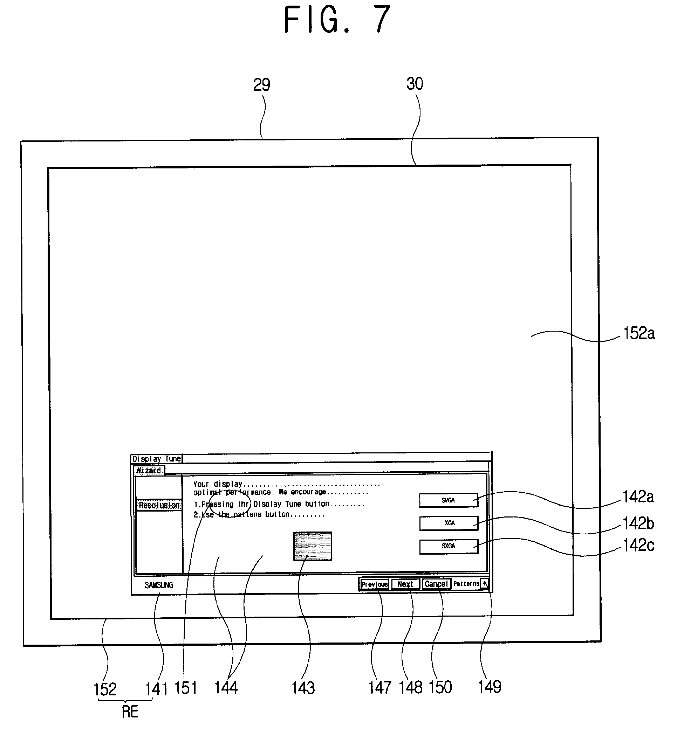

When a user selects the next button 128 of the colour temperature adjusting window 121, a resolution setting window "RE" is shown as shown in Figure 7. The resolution setting window "RE" includes a resolution adjusting window 141 having a plurality of resolution adjusting buttons 142a, 142b, 142c corresponding to a plurality of resolution setting values, labels 151 and a resolution pattern window 152 having a predetermined picture 152a, the resolution of which is adjusted in response to clicking on the resolution adjusting buttons 142a, 142b, 142c.

The resolution adjusting buttons 142a, 142b, 142c included in the resolution adjusting window 141 correspond to the resolutions at which the monitor 20 is capable of operating, e.g. VGA (video graphics array), SVGA (supper video graphics array), XGA (extended graphics array), VXGA (video extended graphics array), SXGA (super extended graphics array), UXGA (ultra extended graphics array), etc. By way of example, Figure 7 shows SVGA, XGA and SXGA resolution adjusting buttons 142a, 142b, 142c. In an embodiment of the invention, the display setting program displays resolution adjusting buttons only for the resolutions that the monitor 20 is capable of using based on the EDID (extended display identification data) from the monitor 20. When the monitor 20 is connected to the computer 10, the computer 10 reads the EDID data from the monitor 20, in order to perform the P'n'P setup for the monitor 20, and stores the read EDID data in a memory unit such as the hard disk drive 13. The display setting program reads the EDID data stored in the memory unit in the monitor 20 before opening the resolution setting window "RE" and determines the monitor's supported resolutions from the read EDID accordingly displays only the appropriate resolution adjusting buttons 142a, 142b, 142c. Thus, when a user selects one of the resolution adjusting buttons 142a, 142b, 142c, the display setting program issues a command corresponding to the selected resolution adjusting button to the microprocessor 22 through the DDC-CI and the microprocessor 22 adjusts the resolution of the picture 152a displayed in the picture area in accordance with the command. The microprocessor 22 controls the scaler 24 to adjust the resolution of the picture 152a, displayed in the resolution pattern window 152, in correspondence with the selected resolution adjusting button 142a, 142b, 142c.

The resolution adjusting window 141 includes an optimizing image widget 143, an animation image widget 144, a previous button 147 and a next button 148 which correspond to the optimizing image widget 103, the animation image widget 104, the previous button 107 and the next button 108 included in the position adjusting window 101. Similarly, the optimizing image widget 143, the animation image widget 144, the previous button 147 and the next button 148 included in the resolution adjusting window 141 are identical with those of the position adjusting window 101 in the disposition, the display and the operation, so that repetitive descriptions will be avoided.

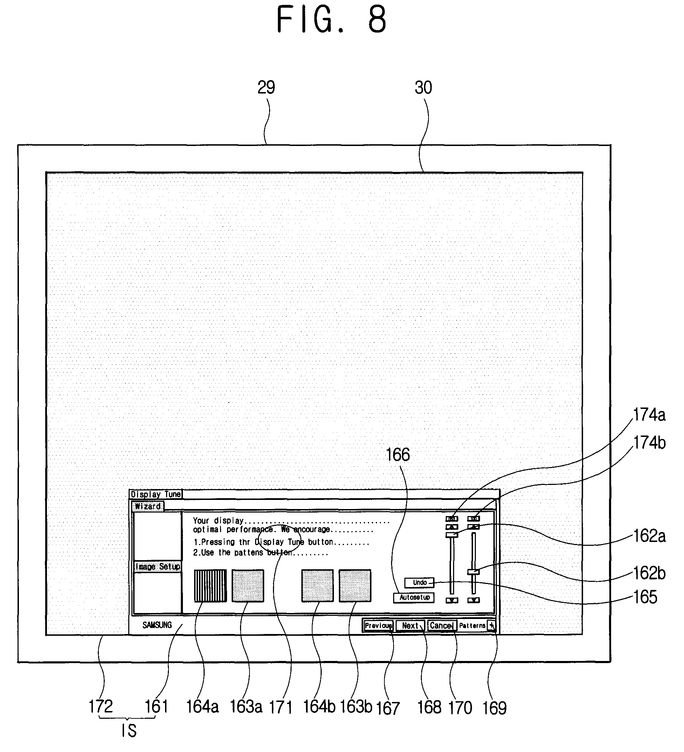

When a user selects the next button 148 of the resolution adjusting window 141, a clock/phase setting window "IS" is shown as shown in Figure 8. The clock/phase setting window "IS" includes a picture setup adjusting window 161 having clock and phase slider widgets 162a, 162b for adjusting the clock and phase settings, labels 171 and a clock/phase pattern window 172 the display of which is changed as the sliders of the clock/phase slider widgets 162a and 162b are moved. When a user moves the slider of one of the clock/phase slider widgets 162a and 162b, the display setting program issues a command corresponding to the new slider position of the clock or phase slider widgets 162a or 162b to the microprocessor 22 through the DDC-CI and the microprocessor 22 adjusts the clock or phase settings of a predetermined picture displayed in the picture area in accordance with the received command. The clock/phase pattern window 172 is adjusted according to the clock/phase setting values changed by the user moving the slider of the clock or phase slider widgets 162a or 162b.

The picture setup adjusting window 161 includes clock and phase level blocks 174a and 174b to represent the clock and phase setting values corresponding to the dragged positions of the clock and phase drag bars 162a and 162b as numerical values, respectively. In an embodiment of the invention, the clock and phase level block 174a and 174b are adjacent to the clock and phase drag bars 162a and 162b, respectively.

The picture setup adjusting window 161, in an embodiment of the invention, includes an undo button 165, optimizing image widgets 163a and 163b, animation image widget 164a and 164b, a previous button 167 and a next button 168 which correspond to the undo button 105, the optimizing image widget 103, the animation image widget 104, the previous button 107 and the next button 108 included in the position adjusting window 101, respectively. Similarly, the undo button 165, the optimizing image widgets 163a and 163b, the animation image widget 164a and 164b, the previous button 167 and the next button 168 included in the picture setup adjusting window 161 are identical with those of the position adjusting window 101 in the disposition, the display and the operation, so that repetitive descriptions will be avoided. Here, the optimizing image widgets 163a and 163b, and the animation image widget 164a and 164b are included on the picture setup adjusting window 161 in correspondence to the clock and phase setting values, respectively.

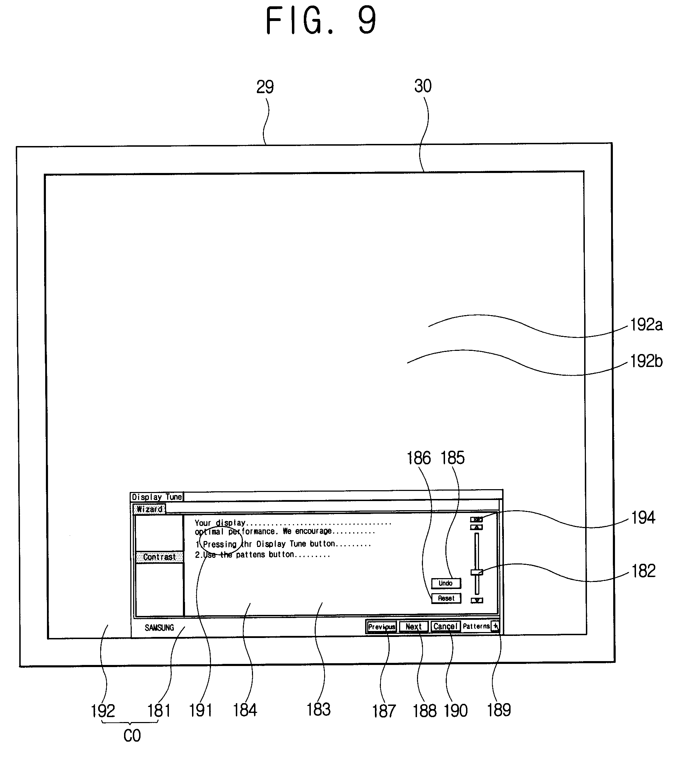

When a user selects the next button 168 of the picture setup adjusting window 161 after the clock/phase adjustment is completed, a contrast setting window "CO" is shown as shown in Figure 9. The contrast setting window "CO" includes a contrast adjusting window 181 having a contrast slider widget 182 for adjusting the contrast setting, labels 191 and a contrast pattern window 192 having a base block 192a and a pattern block 192b, wherein the pattern block 192b is included in the base block 192a and has the contrast to be changed as the contrast drag bar 182 is dragged. When the user moves the slider of the contrast slider widget 182, the display setting program issues the command corresponding to new position of the slider of the contrast slider widget 182 to the microprocessor 22 through the DDC-CI and the microprocessor 22 adjusts the contrast setting of a predetermined picture displayed on the picture area in correspondence to the received command. At this time, the contrast of the pattern block 192b included in the contrast pattern window 192 is adjusted in correspondence to the contrast setting values changed as the slider of the contrast slider widget 182 is moved.

The contrast adjusting window 181 includes a contrast level block 194 to represent the contrast setting value corresponding to the dragged position of the slider of the contrast slider widget 182 as a numerical value. In an embodiment of the invention, the contrast level block 194 is adjacent to the contrast drag bar 182.

The contrast adjusting window 181 includes an undo button 185, a reset button 186, an optimizing image widget 183, an animation image widget 184, a previous button 187 and a next button 188 which correspond to the undo button 105, the reset button 106, the optimizing image widget 103, the animation image widget 104, the previous button 107 and the next button 108 included in the position adjusting window 101, respectively. Similarly, the undo button 185, the reset button 186, the optimizing image widget 183, the animation image widget 184, the previous button 187 and the next button 188 included in the contrast adjusting window 181 are identical with those of the position adjusting window 101 in the disposition, the display and the operation, so that repetitive descriptions will be avoided.

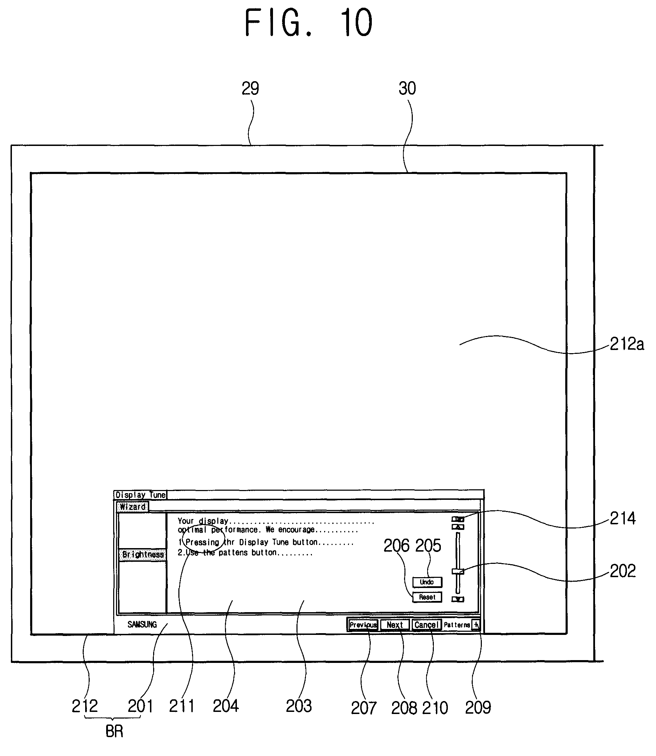

When a user selects the next button 188 of the contrast adjusting window 181 after the contrast adjustment is completed, a brightness setting window "BR" is shown as shown in Figure 10. The brightness setting window "BR" includes a brightness adjusting window 201 having a brightness slider widget 202 for adjusting the brightness setting value, labels 211 and a brightness pattern window 212 having a gradation picture 212a the brightness of which is changed as the slider of the brightness slider widget 202. When the user moves the slider of the brightness slider widget 202, the display setting program issues a command corresponding to the new position of the slider of the brightness slider widget 202 to the microprocessor 22 through the DDC-CI and the microprocessor 22 adjusts the brightness setting values of a predetermined picture displayed on the picture area in accordance with the received command. The microprocessor 22 controls the backlight 28 to adjust the picture. At this time, the brightness of the gradation picture 212a, included in the brightness pattern window 212, is adjusted in correspondence to the brightness setting values changed by the user moving the slider of the brightness slider widget 202.

The brightness adjusting window 201 includes a brightness level block 214 to represent the brightness setting value corresponding to the position of the slider of the brightness slider widget 202 as a numerical value. In an embodiment of the invention, the brightness level block 214 is adjacent to the brightness drag bar 202.

The brightness adjusting window 201 includes an undo button 205, a reset button 206, an optimizing image widget 203, an animation image widget 204, a previous button 207 and a next button 208 which correspond to the undo button 105, the reset button 106, the optimizing image widget 103, the animation image widget 104, the previous button 107 and the next button 108 included in the position adjusting window 101, respectively. Similarly, the undo button 205, the reset button 206, the optimizing image widget 203, the animation image widget 204, the previous button 207 and the next button 208 included in the contrast adjusting window 201 are identical with those of the position adjusting window 101 in the disposition, the display and the operation, so that repetitive descriptions will be avoided.

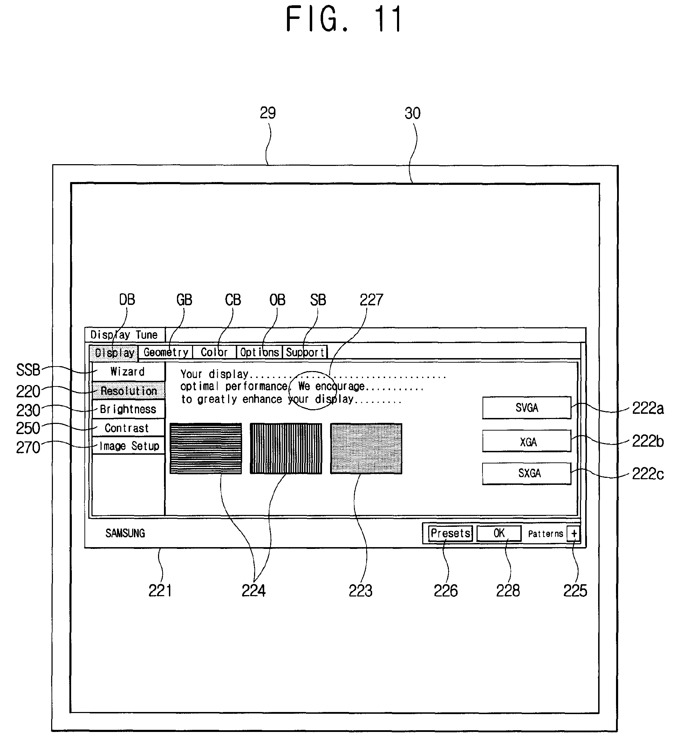

When the user selects the next button 208 of the brightness adjusting window 201, the display setting program shows an adjustment save dialog (not shown), enabling a user to save the newly set display settings values. Then, when the user selects "SAVE", the adjusted display setting values are saved in the hard disk drive 13 in a configuration file or files of the display setting program. The file or files each containing the display setting values can be loaded by selecting preset buttons 226, 238, 258, 278, 297, 328, 317, 354, 364, 374, 384, 394, 404 of display setting windows 221, 231, 251, 271, 291, 311, 331, 351, 361, 371, 381, 391, 401 shown in Figures 11 to 23. When one of the loaded files or file parts is opened, the display setting program adjusts the display setting values on the basis of the display setting values contained in the file or files. Thus, a user can save a plurality of display setting values as one display configuration, so that the display configuration based on a plurality of display setting values can be set by one selection. At least one of the preset buttons 226, 238, 258, 278, 297, 328, 317, 354, 364, 374, 384, 394, 404, included in the display setting windows 221, 231, 251, 271, 291, 311, 331, 351, 361, 371, 381, 391, 401, may be disabled. Furthermore, at least one of the display setting windows 221, 231, 251, 271, 291, 311, 331, 351, 361, 371, 381, 391, 401 may not have a preset button.

It is understood that the sequence described above is not intended to limit the invention in any way. It is further noted that the display settings discussed above may be adjusted in any sequence according to this invention.

As described above, the process of sequentially adjusting a plurality of display settings by selecting the step start button "SSB" of the main window "SW" shown in Figure 4 is completed.

Hereinbelow, a process of adjusting the display settings by selecting the tabs "DB, GB, CB" will be described with reference to Figures 11 through 23.

The tabs "DB, GB, CB" included on the main window "SW" each correspond to at least one display setting group. The display setting groups include at least one display setting. In this embodiment, the display setting groups comprise a first setting group including the resolution setting, the brightness setting, the contrast setting, the clock setting and the phase setting, a second setting group including the position setting and a third setting group including calibration setting and the colour temperature setting. Thus, the tabs "DB, GB, CB" comprise a display tab "DB" corresponding to the first setting group, a geometry tab "GB" corresponding to the second setting group, and a colour tab "CB" corresponding to the third setting group. When a tab "DB, GB, CB" is selected, a panel associated with tab for adjust the display setting belonging to the corresponding setting group is displayed in the window.

On the other hand, when the display tab "DB" of the main window "SW" is selected, a display adjusting panel is revealed, wherein the display adjusting panel includes a resolution button 220 corresponding to the resolution setting, a brightness button 230 corresponding to the brightness setting, a contrast button 250 corresponding to the contrast setting, and a picture setup button 270 corresponding to the clock/phase setting. In this embodiment, the display adjusting panel is the deafault displayed panel of the main window "SW", but may be displayed separately from the main window "SW".

As shown in Figure 11, when a user selects the resolution button 220, displayed on the display adjusting panel (in this embodiment, the resolution button 220 is displayed on the main window shown in Figure 4), a resolution adjusting panel 221, having a plurality of resolution adjusting buttons 222a, 222b, 222c corresponding to the plurality of resolution setting values, is revealed in the display adjusting panel. The resolution adjusting buttons 222a, 222b, 222c are included in correspondence to the capable resolutions of the monitor 20, e.g. VGA, SVGA, XGA, VXGA, SXGA, UXGA, etc. By way of example, Figure 11 shows SVGA, XGA and SXGA resolution adjusting buttons 222a, 222b, 222c. The supported resolutions are based on the EDID data stored in the monitor 20 and it is preferable that selectable resolution adjusting buttons only be provided for the supported resolutions based on the EDID data. When the monitor 20 is connected to the computer 10, the computer 10 reads EDID data from the monitor 20 in order to perform the P'n'P set up and stores the read EDID data in a memory unit such as the hard disk drive 13. Therefore, the display setting program reads the EDID stored in the memory unit before opening the resolution adjusting window 221 and determines what resolution adjusting buttons correspond to the capable resolutions based on EDID of the monitor 20, thereby selectively activating the resolution adjusting buttons 222a, 222b, 222c related to the capable resolutions of the monitor 20. Further, it should be appreciated that the display setting program can read the EDID not from the memory unit of the computer 10 but the memory of the monitor 20 directly.

Thus, when a user selects one of the resolution adjusting buttons 142a, 142b, 142c, the display setting program issues a command corresponding to the selected resolution adjusting button to the microprocessor 22 through the DDC-CI and the microprocessor 22 adjusts the resolution of the picture displayed in the picture area according to the received command.

Additionally, the resolution adjusting panel 221 is displayed with a pattern activating button 225. When a user selects the pattern activating button 225, a resolution pattern window, the resolution of which is changed in accordance with the selected resolution adjusting button 222a, 222b, 222c, is shown. The resolution pattern window is identical with the resolution pattern window 152 of the above-described resolution setting window "RE".

The resolution adjusting panel 221 is displayed with an OK button 228. When the user selects the OK button 228, the changed resolution setting value is saved in the memory of the monitor 20.

The resolution adjusting panel 221 includes an optimizing image widget 223, labels 227 and an animation image widget 224. The optimizing and animation image widgets 223 and 224 of the resolution adjusting panel 221 are identical with the optimizing and animation image widgets 143 and 144 of the resolution adjusting window 141.

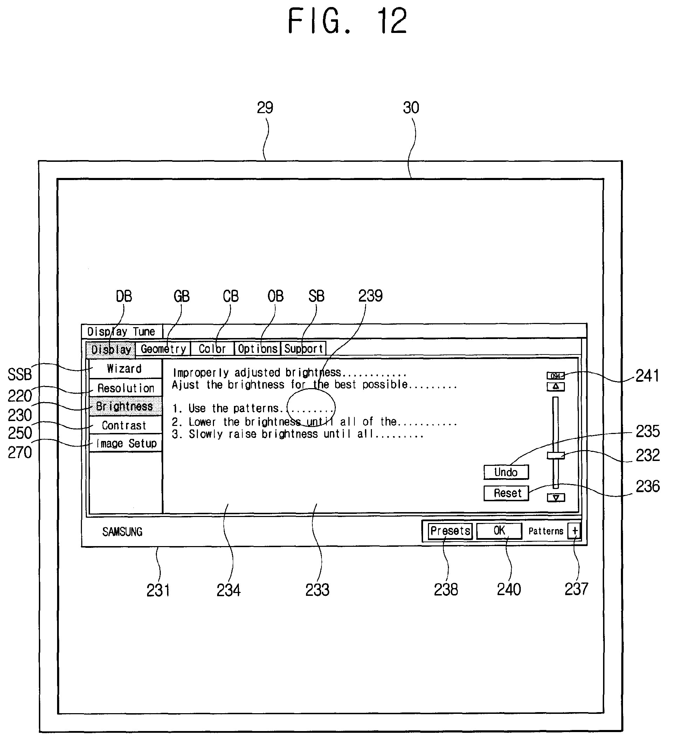

As shown in Figure 12, when a user selects the brightness button 230, a brightness adjusting panel 231 having a brightness slider widget 232 for adjusting the brightness setting value is revealed. When the user moves the slider of the brightness slider widget 232, the display setting program issues the command corresponding to the position of the slider of the brightness slider widget 232 to the microprocessor 22 through the DDC-CI and the microprocessor 22 adjusts the brightness of a predetermined picture displayed in the picture area in accordance with the received command.

Additionally, the brightness adjusting window 231 is displayed with a pattern activating button 237. When the user selects the pattern activating button 237, a brightness pattern window, having a gradation picture, the brightness of which is changed as the slider of the brightness slider widget 232 is moved, is shown. The brightness pattern panel is largely identical with the above-described brightness pattern widow 212 of the brightness setting window "BR".

The brightness adjusting panel 231 includes a brightness level block 241 to represent the brightness setting value corresponding to the position of the slider of the brightness slider widget 232 as a numerical value. In an embodiment of the invention, the brightness level block 241 is adjacent to the brightness slider widget 232.

The brightness adjusting panel 231 is displayed with an OK button 240. When the user selects the OK button 240, the changed brightness setting value is saved in the memory of the monitor 20.

The brightness adjusting panel 231 includes labels 239, an undo button 235, a reset button 236, an optimizing image widget 233 and an animation image widget 234. Here, the undo button 235, the reset button 236, the optimizing image widget 233 and the animation image widget 234 of the brightness adjusting window 231 are identical with the undo button 205, the reset button 206, the optimizing image widget 203 and the animation image widget 204 of the above-described brightness adjusting window 201.

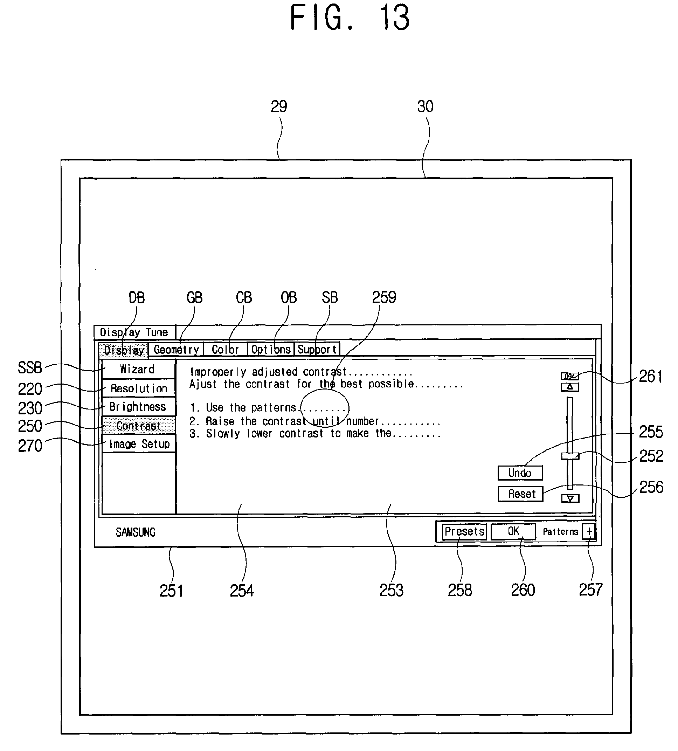

As shown in Figure 13, when a user selects the contrast button 250, a contrast adjusting panel 251, having a contrast slider widget 252 for adjusting the contrast setting value, is revealed. When a user moves the slider of the contrast slider widget 252, the display setting program issues a command, corresponding to the position of the slider of the contrast slider widget 252, to the microprocessor 22 through the DDC-CI and the microprocessor 22 adjusts the contrast setting values of a predetermined picture displayed in the picture area in correspondence to the received command.

Additionally, the contrast adjusting window 251 includes a pattern activating button 257 and labels 259. When the user selects the pattern activating button 257, a contrast pattern window having a base block and a pattern block, is shown. The pattern block is included in the base block and has the contrast to be changed as the slider of the contrast slider widget 252 is moved. The contrast pattern panel is largely identical to the above-described contrast pattern window 192.

The contrast adjusting panel 251 includes a contrast level block 261 to represent the contrast setting value corresponding to the position of the slider of the contrast slider widget 252 as a numerical value. In an embodiment of the invention, the contrast level block 252 is adjacent to the contrast slider widget 252.

The brightness adjusting panel 251 is displayed with an OK button 260. When a user selects the OK button 260, the changed contrast setting value is saved in the memory of the monitor 20.

The contrast adjusting panel 251 includes an undo button 255, a reset button 256, an optimizing image widget 253 and an animation image widget 254. The undo button 255, the reset button 256, the optimizing image widget 253 and the animation image widget 254 of the contrast adjusting panel 251 are identical with the undo button 185, the reset button 186, the optimizing image widget 183 and the animation image widget 184 of the above-described contrast adjusting window 181.

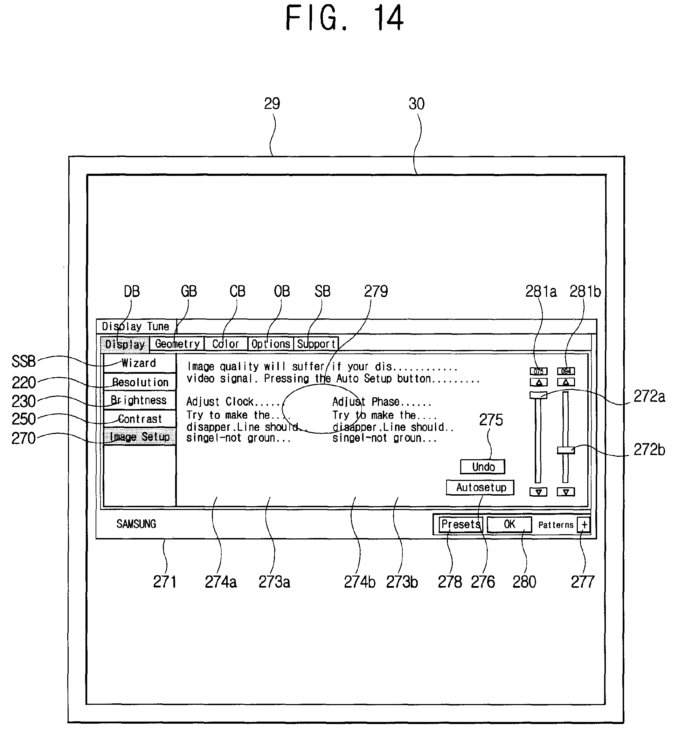

As shown in Figure 14, when the user selects the picture setup button 270, a picture setup adjusting panel 271, having clock and phase slider widgets 272a, 272b for adjusting the clock and phase setting values, and labels 279, is revealed. When the user moves slider of the clock or phase slider widget 272a or 272b, the display setting program issues a command, corresponding to the changed clock or phase slider widget 272a or 272b to the microprocessor 22 through the DDC-CI and the microprocessor 22 adjusts the clock or phase setting values of a predetermined picture displayed in the picture area in accordance with the received command.

Additionally, the picture setup adjusting panel 271 is displayed with a pattern activating button 277. When a user selects the pattern activating button 277, a clock/phase pattern window, the display of which is changed as the sliders of the clock or phase slider widgets 272a or 272b are moved, is opened. The clock/phase pattern window is identical with the clock/phase pattern widow 172 of the above-described clock/phase setting window "IS".

The picture setup adjusting panel 271 includes clock and phase level blocks 281a and 281b to represent the clock and phase setting values corresponding to the positions of the sliders of the clock and phase slider widgets 272a and 272b as numerical values. In an embodiment of the invention, the clock and phase level block 281a and 281b are adjacent to the clock and phase slider widgets 272a and 272b.

The picture setup adjusting panel 271 is displayed with an OK button 280. When a user selects the ok button 280, the changed clock/phase setting value is saved in the memory of the monitor 20.

The picture setup adjusting panel 271 includes an undo button 275, optimizing image widgets 273a and 273b and animation image widgets 274a and 274b. The undo button 275, the optimizing image widgets 273a and 273b and the animation image widgets 274a and 274b of the picture setup adjusting panel 271 are identical with the undo button 165, the optimizing image widgets 163a and 163b and the animation image widget 164a and 164b included in the picture setup adjusting window 161 of the clock/phase setting window "IS".

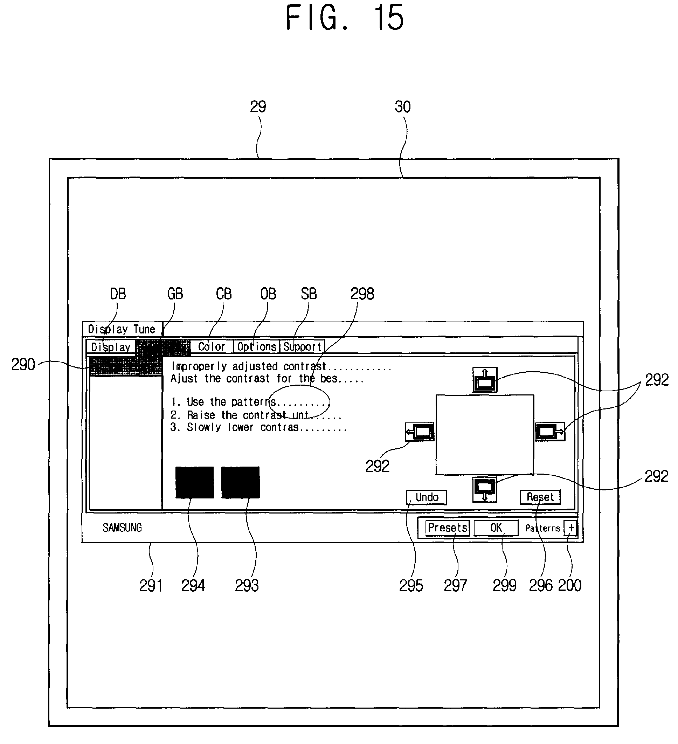

When the user selects the geometry tab "GB", as shown in Figure 4, a geometry setting panel is revealed, as shown in Figure 15. In this embodiment, the geometry setting panel includes only a position button 290 corresponding to the position setting function belonging to the second setting group. However, the second setting group may include a size setting function to adjust the size of the picture area relative to the monitor.

When a user selects the position button 290, a position adjusting panel 291, having four position adjusting buttons 292 for moving the picture area up, down, left and right on the monitor and labels 298, is revealed on the geometry setting panel as shown in Figure 15. When the user selects a position adjusting button 292, the display setting program issues the command corresponding to the selected position adjusting button 292 to the microprocessor 22 through the DDC-CI and the microprocessor 22 moves the picture area accordingly.

The position adjusting panel 291 includes a pattern activating button 300. When the user selects the pattern activating button 300, a position pattern window is displayed in the picture area except in the area occupied by the position adjusting window 291. The position pattern window is identical with the position pattern window 112 of the position setting window "PO".

The position adjusting window 291 is displayed with an OK button 229. When the user selects the OK button 229, the changed position setting value is saved in the memory of the monitor 20.

The position adjusting window 291 includes an undo button 295, a reset button 296, an optimizing image widget 293 and an animation image widget 294. The undo button 295, the reset button 296, the optimizing image widget 293 and the animation image widget 294 of the position adjusting window 291 are identical with the undo button 105, the reset button 106, the optimizing image widget 103 and the animation image widget 104 included in the position adjusting window 101 of the position setting window "PO".

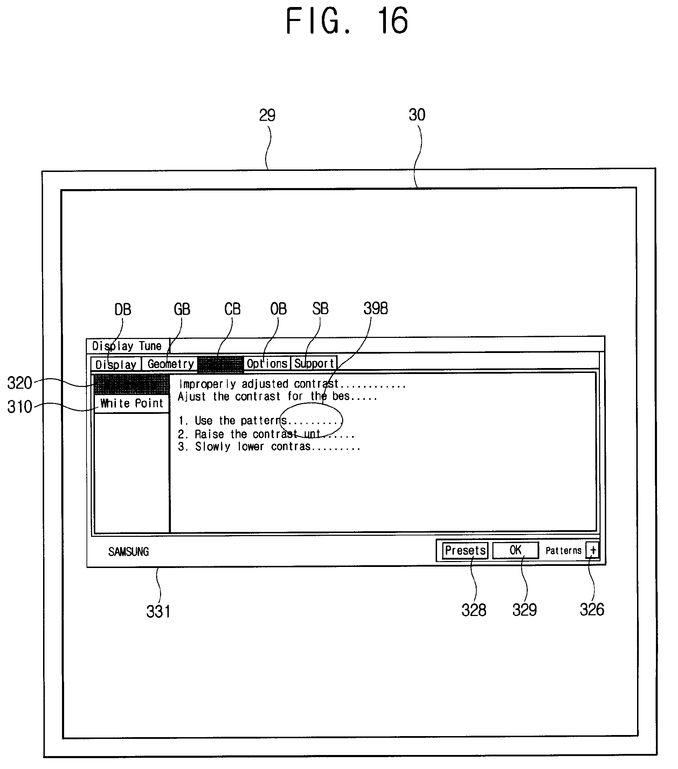

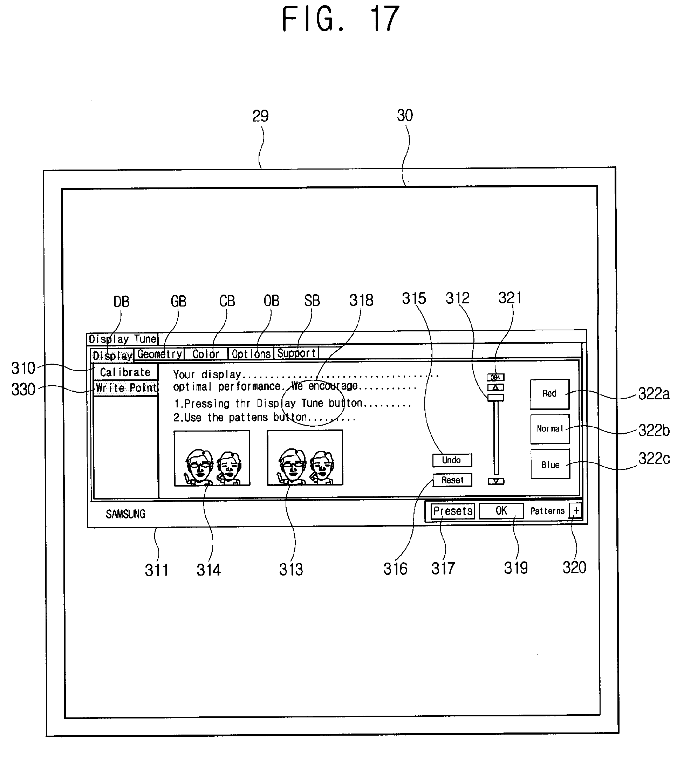

When the user selects the colour tab "CB", as shown in Figure 4, a colour adjusting panel 331 is revealed, as shown in Figures 16 and 17. The colour adjusting panel 331 includes a calibration button 330 corresponding to the calibration setting, labels 398 and a colour temperature button 310 corresponding to the colour temperature setting.

When the user selects the colour temperature button 310, a colour temperature adjusting panel 311, having a colour temperature slider widget 312 for adjusting the colour temperature setting and labels 318, is revealed in the colour adjusting panel 331. When the user moves the slider of the colour temperature slider widget 312, the display setting program issues a command corresponding to the dragged colour temperature slider widget 312 to the microprocessor 22 through the DDC-CI and the microprocessor 22 adjusts the colour temperature of the picture displayed on the picture area accordingly.

The colour temperature adjusting window 311 includes a pattern activating button 320. When the user selects the pattern activating button 320, a colour temperature pattern window having a predetermined picture, the colour temperature of which is changed according to the colour temperature setting value as the slider of the colour temperature slider widget 312 of the colour temperature adjusting window 311 is moved. The colour temperature pattern window is identical to the colour temperature pattern window 132 of the colour temperature setting window "WP".

The colour temperature adjusting panel 311 includes a colour temperature level block 321 to represent the colour temperature setting value corresponding to the position of the slider of the colour temperature slider widget 312 as a numerical value. In an embodiment of the invention, the colour temperature level block 321 is adjacent to the colour temperature slider widget 312.

The colour temperature adjusting panel 311 includes a red button 322a to decrease the colour temperature setting value, a blue button 322c to increase the colour temperature setting value and a normal button 322b to adjust the colour temperature setting value to a median value between the red and blue. When a user selects the red button 322a, the colour temperature of the picture displayed on the picture area is decreased. When a user selects the blue button 322c, the colour temperature of the picture displayed on the picture area is increased.

The colour temperature adjusting panel 311 is displayed with an OK button 319. When the user selects the OK button 319, the changed colour temperature setting value is saved in the memory of the monitor 20.

The colour temperature adjusting panel 311 includes an undo button 315, a reset button 316, an optimizing image widget 313 and an animation image widget 314. Here, the undo button 315, the reset button 316, the optimizing image widget 313 and the animation image widget 314 of the colour temperature adjusting window 311 are identical with the undo button 125, the reset button 126, the optimizing image widget 123 and the animation image widget 124 included in the colour temperature adjusting window 121 of the colour temperature setting window "WP" according to the processes of sequentially adjusting the display settings in the disposition, the display and the operation, so that the repetitive descriptions will be avoided.

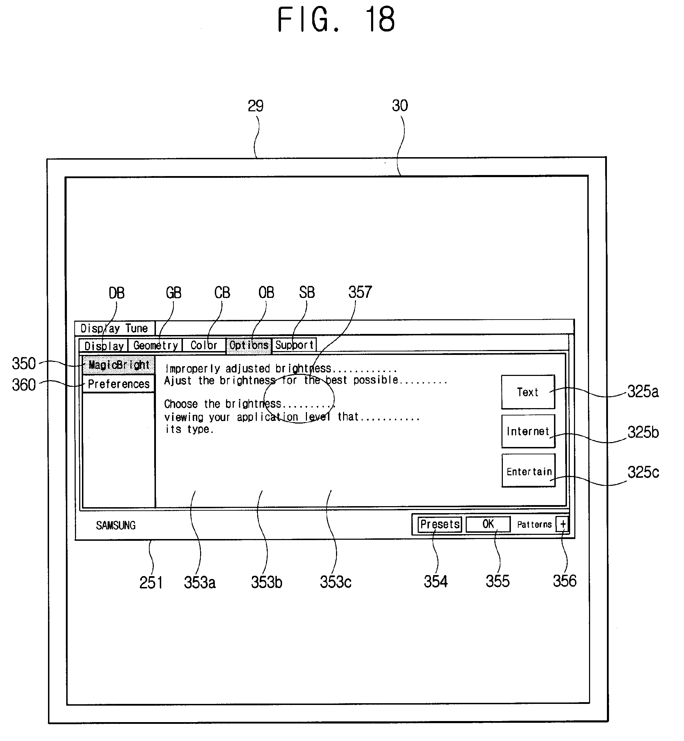

The main window "SW" further includes an options tab "OB" as shown in Figure 4. When the user selects the option tab "OB", an option adjusting panel, having a magic brightness button 350 and a preferences button 360, is revealed. The option adjusting panel defaults to the magic brightness setting panel 351 shown in Figure 18, but may be displayed separately.

When a user selects the magic brightness button 350, the magic brightness setting panel 351 is revealed. Through the magic bright setting panel 351, a user can adjust the magic brightness setting. The magic brightness setting is to adjust the brightness of the picture displayed in the picture area according to a specific type picture, so that the magic brightness setting panel 351 includes a plurality of setting buttons 352a, 352b, 352c relating to different types of picture. In this embodiment, the setting buttons include a text button 352a, an internet button 352b, an entertainment button 352c, by way of example, and labels 357. When the user selects the text button 352a, the picture area occupied by a word processor window for a text is displayed more brightly than other areas. When the user selects the internet button 352b, the picture area occupied by an internet browser window of the Internet is displayed more brightly than other areas.

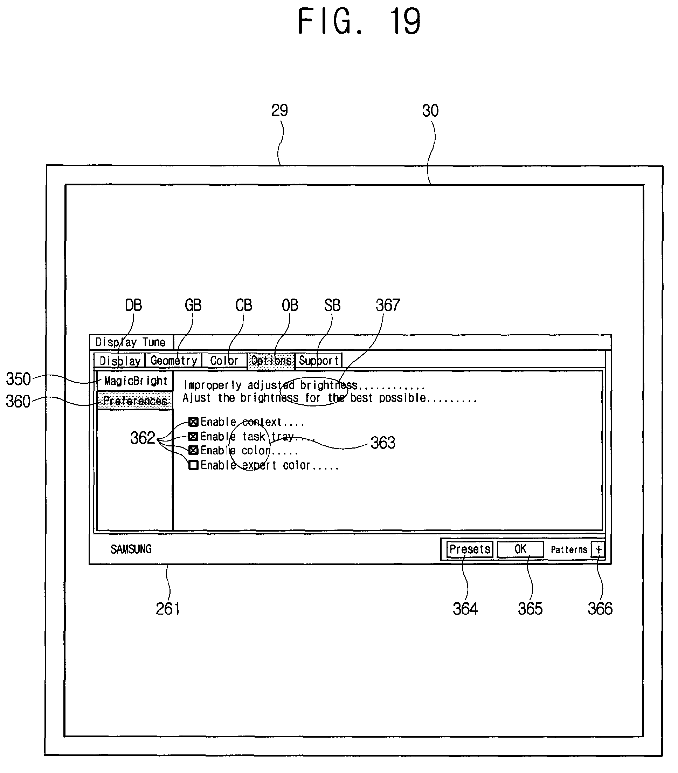

When a user selects the preferences button 360, a preferences setting panel 361 is revealed as shown in Figure 19. The preferences setting panel 361 displays a comment 367 on the preference setting, a plurality of check boxes 362 relating to respective sub-settings and a plurality of check box labels 363 on the respective check boxes 362. The sub-settings to be selected by checking the check box 362 include whether an icon for launching the display setting program is displayed in a system tray of a Windows™ desktop.

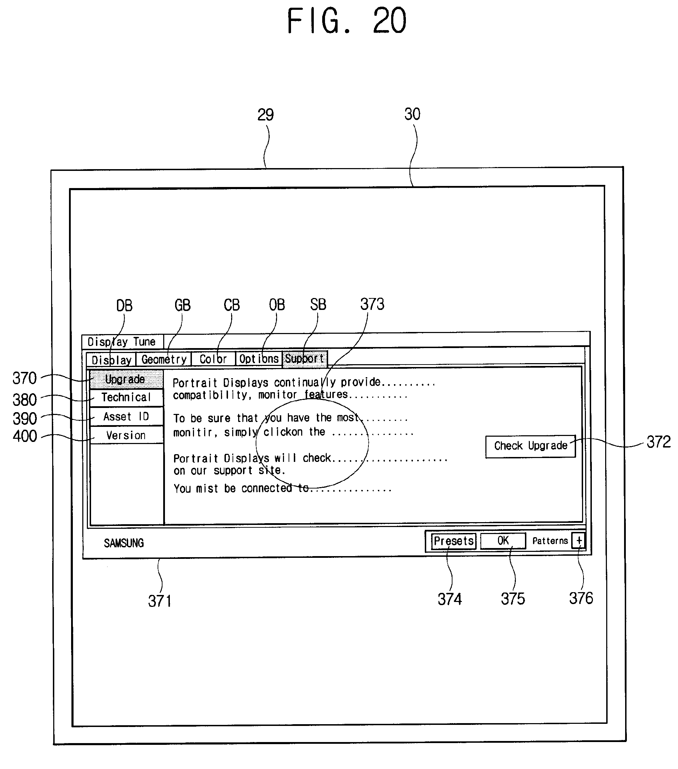

The main window "SW" further includes a support tab "SB" as shown in Figure 4. When the user selects the support tab "SB", a product support panel having an upgrade button 370, a technical button 380, an asset ID (identification) button 390 and a version button 400, is revealed. In this embodiment, the product support panel defaults to the upgrading panel 371 shown in Figure 20, but may default to different panel.

When th user selects the upgrade button 370, the upgrading panel 371, having an upgrade check button 372 for triggering checking for an upgrade the display setting program and labels 373, is revealed, as shown in Figure 20. If the user selects the upgrade check button 372, the display setting program accesses to an upgrade supporting system through a communication module of the computer 10, such as a modem. The upgrade supporting system includes an upgrading web site that is administered by the vendor of the display setting program or the monitor 20 and supports the upgrading of the display setting program. Thus, a user can download upgrade information or an upgraded version of the display setting program.

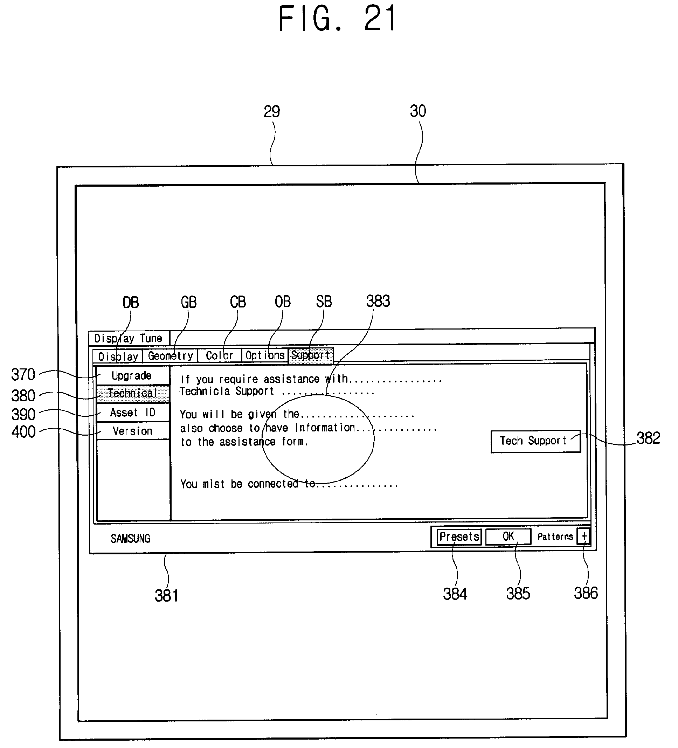

When the user selects the technical button 380, a technical support panel 381, having a technical support button 382 for triggering reception of technical support from a technical support system, and labels 383, as shown in Figure 21, is revealed. If the user selects the technical support button 382, the display setting program has access to the technical support system through a communication module of the computer 10, such as the modem. The technical support system includes a technical support web site that is administered by the vendor of the display setting program or the monitor 20.

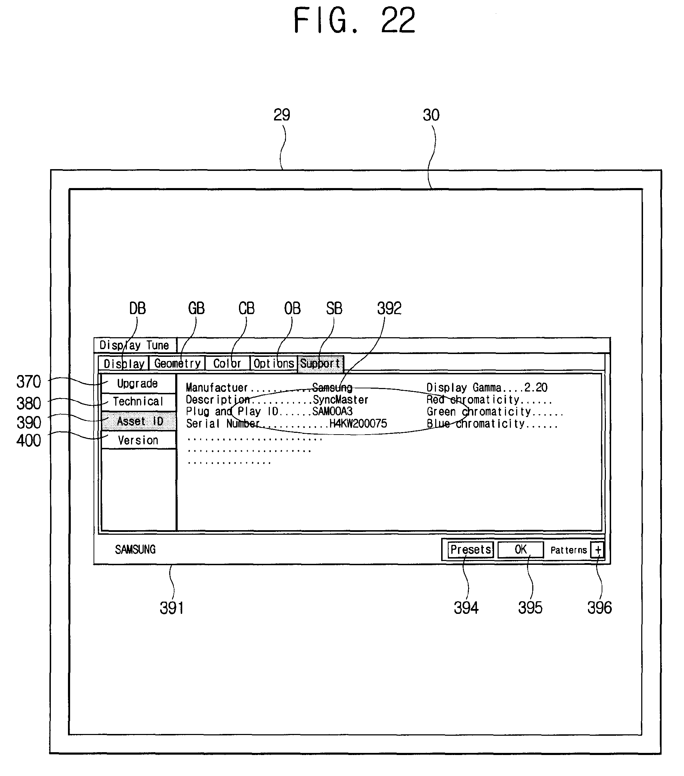

When the user selects the asset ID button 390, a display apparatus information panel 391, having labels 392 giving information about the monitor 20, is revealed, as shown in FIG 22. The information about the monitor 20 is based on the EDID data. The display setting program can read the EDID data from either the memory unit of the computer 10 or the memory of the monitor 20. The labels 392 displayed on the display apparatus information panel 391 include information on a manufacturer, a P'n'P ID, a serial number, a manufacturing date, etc.

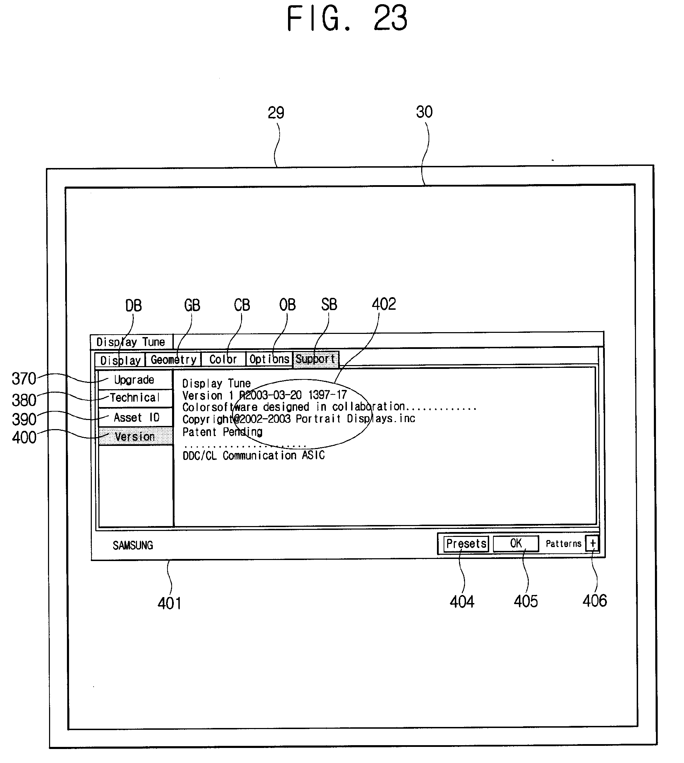

When the user selects the version button 400, the version information panel 401, having labels 402 giving version information about the display setting program, is revealed, as shown in FIG 23. The version information includes the program name, the version, the developer, etc.

In Figures 5 to 10, the reference numerals 110, 130, 150, 170, 190 and 210 indicate cancel buttons to finish the display setting program. In Figures 5 to 10, the reference numerals 109, 129, 149, 169, 189, 209 indicate the pattern activating buttons allowing the pattern windows 112, 132, 152, 172, 192, 212 to be activated on or hidden from the picture area, or to be changed into a predetermined picture.

In Figures 8 and 14, the reference numerals 166, 276 indicate auto-setup buttons to change at least one of the display settings of the picture displayed on the picture area to saved display settings. In the present embodiment, when the auto-setup button is selected, the position setting and the clock/phase setting are adjusted to the display settings saved in the memory unit of the computer 10 or the memory of the monitor 20.

As described above, there is included a method comprising: connecting the display apparatus with the external device, making the two-way communication therebetween possible; displaying the main window including the step start buttons included to adjust the plurality of display settings of the picture displayed on the picture area sequentially, and at least one menu button included to adjust the display settings of the picture displayed on the picture area individually; selecting one of the step start buttons and the menu buttons; displaying the display setting window corresponding to the selected button; adjusting the display settings through the displayed display setting window; issuing the command from the external device in correspondence to adjusting the display settings; and setting the display settings in correspondence to the received command, so that the present invention provides a convenient user interface to adjust the plurality of display settings of the picture displayed on the picture area.

As described above, the present invention provides a convenient user interface to adjust a plurality of display settings of a picture displayed on a picture area.

It is understood that the present invention can be used with a variety of display devices including, although not limited to, computer monitors, hand-held devices, televisions, and plasma display devices.

## Claims

1. A method of configuring a monitor connected to receive video signals from a computer, the method comprising running a configuration program which displays its user interface on the screen of the monitor, **characterised in that** the program is run on the computer.

2. A method according to claim 1, wherein the program is configured to receive user input signals from a source other than the monitor.

3. A computer system comprising a monitor connected to a computer to received video signals therefrom, **characterised by** the computer being programmed with a program for configuring the monitor.

4. A signal representing a program for programming a computer connected to a monitor to produce a system according to claim 3.

5. A data carrier having a signal according to claim 4, recorded therein or thereon.

6. A method to provide a convenient user interface to change a display setting of a picture area of a display apparatus, which communicates with an external device, the method comprising:
displaying a main window, including a step start button to initiate a sequence of at least first and second display setting adjustment windows in which first and second display setting adjustments are made;
sequentially displaying the display setting adjustment windows corresponding to a selection of the step start button;
adjusting the display setting through the displayed display setting adjustment windows;
issuing a command from the external device in correspondence to adjusting the displayed display setting adjustment windows; and
setting the display setting in correspondence to the command.

7. The method according to claim 6, wherein the main window includes a menu button to separately adjust the display settings.

8. The method according to claim 6, wherein the display setting adjustments are selected from the following:
a picture position adjustment;
a colour temperature adjustment;
a resolution adjustment;
clock and phase adjustments;
a contrast adjustment; and
a brightness adjustment.

9. The method according to claim 6, wherein a last display setting adjustment window in the sequence includes a button to open an adjustment save window to save adjusted display settings.

10. The method according to claim 9, further comprising saving the adjusted display settings as a file through the adjustment save window.

11. The method according to claim 10, further comprising:
opening the file;
adjusting a display setting on the basis of the saved adjusted display setting in the opened file.

12. The method according to claim 6, wherein at least one of the display setting adjustment windows comprise an undo button to undo the display setting adjustment.

13. The method according to claim 6, wherein at least one of the display setting adjustment windows comprise a reset button to return the display setting to a default setting.

14. The method according to claim 6, wherein the menu button is plural in number and comprises:
a display button corresponding to a first setting group including a resolution setting, a brightness setting, a contrast setting, and a clock and phase setting;
a geometry button corresponding to a second setting group including a position setting; and
a colour button corresponding to a third setting group including a calibration setting, and a colour temperature setting, wherein when each menu button is selected, a window to adjust the display setting belonging to the corresponding setting group is opened.

15. The method according to claim 14, wherein when the display button is selected, a display adjusting window is opened, the display adjusting window comprising:
a resolution button corresponding to the resolution setting;
a brightness button corresponding to the brightness setting;
a contrast button corresponding to the contrast setting; and
a picture setup button corresponding to the clock and phase setting, is opened.

16. The method according to claim 15, wherein when one of the buttons is selected, a adjusting window, in which a display setting adjustment corresponding to the selected button is made, is opened.

17. The method according to claim 16, wherein the adjusting window comprises a pattern activating button to open a pattern window having an image which is changed as the display setting adjustment are made in the adjusting window.

18. The method according to claim 16, wherein the adjusting window comprises:
an undo button to undo the display setting adjustment;
a reset button to return the display setting to a default setting; and
an animation window to show an animation of the display setting adjustment.

19. The method according to claim 14, wherein when the geometry button is selected, a geometry setting window, including a position button, corresponding to the second setting group, is opened.

20. The method according to claim 19, wherein the geometry setting window comprises a pattern activating button to open a pattern window having a picture which is changed as the display setting adjustment are made in the adjusting window.

21. The method according to claim 19, wherein the adjusting window comprises:
an undo button to undo a position adjustment;
a reset button to return a position setting to a default setting; and
an animation window to show an animation of a position adjustment.

22. The method according to claim 14, wherein when the colour button is selected a colour adjusting window, including a calibration button corresponding to a calibration setting and a colour temperature button corresponding to a colour temperature of the picture displayed by the display apparatus, is opened.

23. The method according to claim 22, wherein when a user selects the colour temperature button, a colour temperature adjusting window, in which a colour temperature of the picture displayed by the display apparatus is adjusted, is opened.

24. The method according to claim 23, wherein the colour temperature adjusting window comprises a pattern activating button, wherein when the pattern activating button is selected, a colour temperature pattern window, having a picture with a colour temperature that is changed as the colour temperature is adjusted in the colour temperature adjusting window, is opened.

25. The method according to claim 23, wherein the colour temperature adjusting window further comprises:
an undo button to undo a colour temperature adjustment;
an optimizing window to display an optimized colour temperature setting of the picture area; and
an animation window to show an animation of a colour temperature adjustment.

26. The method according to claim 14, wherein the menu further comprises:
an option button to open an option adjusting window having a magic bright button and a preferences button;
a support button to open a support adjusting window having an upgrade button, a technical button, an asset ID button, and a version button.

27. A display apparatus receiving a video signal from a external device and displaying a image corresponding to the video signal, comprising:
a interface to communicate with the external device; and
a microprocessor to display a main window including a step start button to initiate a sequence of at least first and second display setting adjustment windows in which first and second display setting adjustments are made, based on a video signal inputted from the external device, and to adjust a display setting of the display based on a command inputted from the external device through the interface in correspondence to adjusting the displayed display setting adjustment windows.

28. The display apparatus according to claim 27, wherein the display further comprises:
an A/D converter to convert the video signal into a digital signal,
a scalar to fit the digitized signal to the size of an LCD panel and transmitting the digitized signal to a panel driving part operating the LCD panel; a backlight; and
a power supply to supply power according to the microprocessor.

29. The display apparatus according to claim 28, wherein the external device comprises a computer including:
a graphic controller connected to the interface; and
a stored display setting program to provide the main window, to issue the command; wherein
the display setting program transmits the command and a programming signal to provide the main window to the graphic controller, which converts the programming signal into a video signal, and the graphic controller transmits the converted video signal and the command to the display apparatus through the interface.

30. The display apparatus according to claim 29, wherein the microprocessor controls the A/D converter, the scalar, and the panel driving part according to the command from the graphic controller.

31. The display apparatus according to claim 30, wherein when a user selects an item with an input unit, the display setting program issues a corresponding command to the graphic controller to adjust a corresponding display setting.

32. The display apparatus according to claim 27, wherein the interface employs a Display Data Channel Common Interface (DDC-CI) including a signal line and signal sequence such that the external device reads data from the display apparatus through the DDC-CI and the command from the display setting program is transmitted to the display through the DDC-CI.

33. The display apparatus according to claim 27, wherein the interface employs a Universal Serial Bus (USB).

34. A machine readable storage controlling a display apparatus to change a display setting of a picture area, which communicates with an external device, according to a method, the method comprising:
displaying a main window including a step start button to initiate a sequence of at least first and second display setting adjustment windows in which first and second display setting adjustments are made;
sequentially displaying the display setting adjustment windows corresponding to a selection of the step start button;
adjusting the display setting through the displayed display setting adjustment windows;
issuing a command from the external device in correspondence to adjusting the displayed display setting adjustment windows; and
setting the display setting in correspondence to the command.

35. The machine readable storage according to claim 34, wherein the main window includes a menu button to separately adjust the display settings.
